# EUROPÄISCHE PATENTSCHRIFT

(11) **EP 2 696 072 B1**
(45) Veröffentlichungstag und Bekanntmachung des Hinweises auf die Patenterteilung: **25.03.2015**
(21) Anmeldenummer: 12005805.2
(22) Anmeldetag: 10.08.2012
(51) Int. Cl.: F03D 11/00, F16F 15/03, F03D 11/04

(54) **Schwingungstilgeranordnung für Windkraftanlagen mit Massenpendel und Wirbelstromdämpfer**
Vibration absorber for wind power plants with mass pendulum and eddy currant damper
Agencement de réduction de vibrations, en particulier pour les constructions hautes et fines, et construction dotée d'un agencement de réduction de vibrations

(43) Veröffentlichungstag der Anmeldung: 12.02.2014
(73) Patentinhaber: Wölfel Beratende Ingenieure GmbH & Co. KG, 97204 Höchberg (DE)
(72) Erfinder: Pankoke, Steffen, Dr., 97837 Erlenbach (DE); Loix, Nicolas, Dr., 1401 Nivelles (BE); Engelhardt, Jürgen, Dr., 97249 Eisingen (DE); Katz, Sebastian, 97082 Würzburg (DE)
(74) Vertreter: Knoblauch, Andreas

(56) Entgegenhaltungen:
- WO-A2-2009/068599
- DE-A1- 3 741 578
- DE-B4- 19 856 500
- JP-A- 1 108 431
- US-A1- 2007 131 504

## Beschreibung

Die Erfindung betrifft eine Schwingungstilgeranordnung für hohe schlanke Bauwerke, mit einem Pendel, das am Bauwerk aufhängbar ist und eine Tilgermasse aufweist, und einer Dämpferanordnung.

Eine derartige Tilgeranordnung ist aus WO 2009/068599 A2 bekannt. Hier ist eine Windturbine mit einem Stahlturm dargestellt, in dem ein Pendel mit einer Tilgermasse aufgehängt ist. Das Pendel wirkt mit einer Dämpferanordnung zusammen, die durch eine Reihe von aufeinander liegenden Platten gebildet ist. Die Platten weisen jeweils eine mittige Öffnung auf, durch die das Pendel ragt. Wenn das Pendel schwingt, dann werden die Platten relativ zueinander verschoben. Durch diese Relativverschiebungen der Platten zueinander entsteht Reibung, die der Schwingungsbewegung Energie entzieht.

Eine weitere Tilgeranordnung der eingangs genannten Art ist aus DE 198 56 500 B4 bekannt. Hier ist das Pendel über ein Lager im Turm einer Windturbine aufgehängt, das Elastomer-Bauteile umfasst. Bei einer Schwingung des Pendels werden die Elastomer-Bauteile verformt, wodurch infolge der Materialdämpfung des Elastomer-Materials der Schwingungsbewegung Energie entzogen wird.

Die Erfindung wird im Folgenden anhand eines Turms für eine Windenergieanlage beschrieben. Sie ist aber auch bei anderen hohen und schlanken Bauwerken anwendbar, z.B. bei Schornsteinen, Antennen, Hochhäusern, Türmen oder Offshore-Bauwerken wie Transformator-Stationen. Unter einem "hohen, schlanken Bauwerk" soll ein Bauwerk verstanden werden, das ein Verhältnis zwischen Höhe und kleinster Breite von mindestens 5 aufweist.

In Windenergieanlagen ist der Durchmesser der Rotoren in den letzten Jahren stetig gewachsen. In gleicher Weise muss die Höhe der Türme der Windenergieanlagen wachsen, weil in größeren Höhen bessere Windverhältnisse herrschen und weil die Rotorblätter einen bestimmten Sicherheitsabstand zum Boden aufweisen müssen. Aus Gründen der Materialkosten ist man jedoch bestrebt, die Türme möglichst schlank zu halten.

Der Turm einer Windenergieanlage wird zu Schwingungen angeregt, insbesondere durch Windkräfte, aber auch durch Betriebskräfte und bei Windenergieanlagen im Meer zusätzlich durch Wellenkräfte. Dabei verbiegt sich der Turm, was auf Dauer zu kritischen Zuständen führen kann. Relevant sind im Wesentlichen die beiden ersten Biege-Eigenformen des Turms samt Gondel und Rotor.

Eine Maßnahme zur Erhöhung der Dämpfung und damit zur Verminderung der Schwingungen des Turms ist die Verwendung von Schwingungstilgern. Um die Funktionsfähigkeit von derartigen Tilgern zu gewährleisten, müssen die einzelnen Parameter des Schwingungstilgers aufeinander und auf den jeweiligen Turm abgestimmt werden. Schwierig ist vor allem die Darstellung der Tilgerdämpfung. Die eingangs genannten Lösungen verwenden hierfür Reibungsdämpfung (WO 2009/068599 A2) bzw. Elastomerdämpfung (DE 198 56 500 B4), ferner sind in der Technik für Tilger allgemein Flüssigkeitsdämpfungen bekannt, d.h. Dämpfung, bei der von der Viskosität von Flüssigkeiten Gebrauch gemacht wird.

US 2007/131504 A1 zeigt einen Dämpfer zur Verringerung von Vibrationen einer mechanischen Struktur innerhalb einer ausgewählten Ebene. Die Dämpferanordnung ist dabei mit einem Rahmen an einer zu dämpfenden Struktur angebracht. Die Dämpferanordnung ist weiterhin als Wirbelstromdämpfer ausgebildet und umfasst eine leitfähige Platte sowie eine Magnetanordnung. Die leitfähige Platte oder die Magnetanordnung ist dabei über flexible Elemente mit dem Rahmen verbunden. Somit kann die leitfähige Platte relativ zur Magnetanordnung bewegt werden um zur Dämpfung Wirbelströme zu erzeugen.

DE 37 41 578 A1 zeigt eine weitere Vibrationsdämpfungsvorrichtung umfassend ein erstes Bauteil und ein zweites Bauteil die über eine Federvorrichtung miteinander verbunden sind. Am ersten Bauteil ist dabei eine Magnetanordnung befestigt, während am zweiten Bauteil eine Leiteranordnung befestigt ist. Wird die Dämpfungsvorrichtung nun durch eine Vibration in Schwingungen versetzt, so bewegt sich die Leiteranordnung relativ zur Magnetanordnung wodurch Wirbelströme erzeugt werden und eine Dämpfung der Schwingung erfolgt.

JP 1 108431 A zeigt ein zu dämpfendes Bauteil sowie eine Dämpferanordnung. Die Dämpferanordnung umfasst dabei eine leitfähige Platte sowie eine Magnetanordnung die relativ zueinander bewegbar sind. Durch die Relativbewegung von leitfähiger Platte und Magnetanordnung können auch hier Wirbelströme zur Dämpfung von Schwingungen erzeugt werden.

Die in einem Tilger verwendeten Dämpfungselemente müssen hohen Anforderungen bezüglich Temperaturunabhängigkeit, Linearität, Alterung, Verschleiß und Leistungsaufnahmefähigkeit genügen.

Der Erfindung liegt die Aufgabe zugrunde, eine Tilgeranordnung anzugeben, die verschleißarm und alterungsbeständig ist und eine geringere Temperaturabhängigkeit aufweist.

Diese Aufgabe wird bei einer Tilgeranordnung der eingangs genannten Art dadurch gelöst, dass die Dämpferanordnung als Wirbelstromdämpfer ausgebildet ist, wobei der Wirbelstromdämpfer zwei Elemente aufweist, von denen eines als Magnetfelderzeugungseinrichtung und eines als Leiteranordnung ausgebildet ist, wobei eines der Elemente durch eine Bewegung des Pendels relativ zum anderen bewegbar ist, und wobei zwischen den beiden Elementen eine Gleitanordnung angeordnet ist.

Bei einem Dämpfer wird Bewegungsenergie irreversibel in eine andere Energieform umgesetzt. Diese andere Energieform ist in den meisten Fällen Wärme. Ein Wirbelstromdämpfer verwendet zur Umsetzung der Bewegungsenergie elektrische Ströme, die durch ein Magnetfeld induziert werden, das bei einer Bewegung des Pendels gegenüber einem anderen Element bewegt wird. Diese Wirbelströme erzeugen dann Wärme. Die dadurch der Schwingungsbewegung entzogene Energie führt zur Dämpfung der Schwingung. Der Wirbelstromdämpfer hat darüber hinaus den Vorteil, dass seine Dämpfungswirkung abhängig von der Bewegungsgeschwindigkeit des Pendels ist. Bis zu einer Grenzgeschwindigkeit kann die Dämpfungskraft als linear, d.h. als proportional zur Geschwindigkeit angenommen werden. Die Frequenz der Schwingung ist dafür von untergeordneter Bedeutung. Weiterhin weist der Wirbelstromdämpfer zwei Elemente auf, von denen eines als Magnetfelderzeugungseinrichtung und eines als Leiteranordnung ausgebildet ist, wobei eines der Elemente durch eine Bewegung des Pendels relativ zum anderen bewegbar ist. Mit dieser Ausgestaltung wird erreicht, dass ein Magnetfeld, das durch die Magnetfelderzeugungseinrichtung erzeugt wird, gegenüber einer Leiteranordnung bewegt werden kann. Beispielsweise kann die Magnetfelderzeugungseinrichtung am Pendel angeordnet sein. Wenn die Magnetfelderzeugungseinrichtung gegenüber der Leiteranordnung bewegt wird, dann induziert sie in der Leiteranordnung die oben genannten Wirbelströme. Die zur Erzeugung der Wirbelströme notwendige Energie wird der Bewegung des Pendels entzogen. Außerdem ist zwischen den beiden Elementen Magnetfeldanordnung und Leiteranordnung eine Gleitanordnung angeordnet. Die Gleitanordnung hält eine Reibung und damit möglichen Verschleiß klein. Darüber hinaus kann sie für einen konstanten Abstand zwischen den beiden Elementen sorgen und damit für einen gleichförmigen Luftspalt.

Vorzugsweise weist die Leiteranordnung eine elektrisch leitfähige Platte auf, die parallel zur Richtung der Bewegung angeordnet ist. Man kann auf einzelne Leiterbahnen verzichten. Diese sind auch nicht erforderlich, weil die Wirbelströme nicht weiter verwendet werden, sondern der Erzeugung von Verlustleistung dienen, um der Bewegung des Pendels Energie zu entziehen. Durch die Verwendung einer elektrisch leitfähigen Platte ist sichergestellt, dass die Wirbelströme in jeder Position der Magnetfelderzeugungseinrichtung relativ zur Leiteranordnung gleichartig erzeugt werden können.

Hierbei ist bevorzugt, dass die Platte aus Aluminium oder Kupfer oder einer Legierung aus Aluminium und Kupfer oder einem anderen Material mit hoher elektrischer Leitfähigkeit gebildet ist. Die genannten Materialien haben eine ausreichende elektrische Leitfähigkeit, so dass entsprechend große Wirbelströme induziert werden können.

Vorzugsweise ist die Leiteranordnung von einer magnetischen Trägerplatte unterstützt. Die Trägerplatte sorgt für eine vorteilhafte Ausrichtung der magnetischen Feldlinien und für eine erhöhte mechanische Steifigkeit. Sie kann eine geringere elektrische Leitfähigkeit als die Leiteranordnung aufweisen. Beispielsweise kann sie als Stahlplatte ausgebildet sein. Sie sorgt dafür, dass die Leiteranordnung formstabil ist, so dass die Magnetfeldanordnung und die Leiteranordnung immer mit einem relativ geringen Luftspalt relativ zueinander bewegt werden können.

Vorzugsweise ist eines der Elemente über eine Pendel-Gelenkverbindung mit dem Pendel verbunden. Wenn das Pendel schwingt, dann wird es aus der Schwerkraftrichtung ausgelenkt. Die Pendel-Gelenkverbindung sorgt dafür, dass trotz dieser Auslenkung die beiden Elemente parallel zueinander bleiben können oder eine Winkeländerung zwischen den beiden Elementen jedenfalls nicht zu groß wird.

Vorzugsweise erlaubt die Pendel-Gelenkverbindung eine Bewegung zwischen dem Pendel und dem Element senkrecht zur Richtung der Bewegung. In diesem Fall kann man dafür sorgen, dass trotz der Auslenkung des Pendels die Dicke des Luftspalts nicht geändert wird, so dass auch bei einer größeren Auslenkung des Pendels ein Luftspalt aufrecht erhalten bleibt, der eine minimale Dicke aufweist. Je kleiner der Luftspalt ist, desto besser ist die Wirkung der Magnetfelderzeugungseinrichtung zur Erzeugung der Wirbelströme.

Vorzugsweise ist das andere der Elemente über eine Bauwerks-Gelenkverbindung mit dem Bauwerk verbindbar. In diesem Fall kann auch das andere Element eine Bewegung ausführen, die der Auslenkung des Pendels aus der Schwerkraftrichtung heraus folgen kann, so dass der Luftspalt in einem verbesserten Maße klein gehalten werden kann.

Vorzugsweise sind die beiden Elemente über eine Parallelführung miteinander gekoppelt. Die Parallelführung sorgt dafür, dass die beiden Elemente immer parallel zueinander bewegt werden, so dass der Luftspalt immer auf einer konstanten, kleinen Dicke gehalten werden kann. Wenn der Luftspalt konstant gehalten werden kann, dann ist die Erzeugung der Wirbelströme unabhängig von der Auslenkung des Pendels, also über die gesamte Schwingung des Pendels, gleich.

Vorzugsweise ist eines der Elemente mit zwei Teilen ausgebildet und das andere Element ist zwischen den beiden Teilen angeordnet. So kann man beispielsweise die Magnetfelderzeugungseinrichtung zweiteilig ausbilden und die Leiteranordnung zwischen den beiden Teilen anordnen. Es ist auch möglich, die Leiteranordnung zweiteilig auszubilden und die Magnetfelderzeugungseinrichtung zwischen den beiden Teilen der Leiteranordnung anzuordnen. Die beiden Elemente führen sich dann gegenseitig, so dass der Luftspalt zwischen der Leiteranordnung und der Magnetfelderzeugungseinrichtung immer in der eingestellten Dicke beibehalten werden kann.

Vorzugsweise ist zwischen den beiden Elementen ein Luftspalt ausgebildet, der parallel zu einer Ebene angeordnet ist, in der sich das Pendel in einem Ruhezustand befindet. Im Ruhezustand hängt das Pendel senkrecht. Die Ebene, in der der Luftspalt angeordnet ist, steht dann ebenfalls senkrecht. Wenn man eine zweidimensionale Bewegung des Pendels ermöglichen möchte, dann kann man entweder dafür sorgen, dass der Luftspalt gedreht werden kann, so dass die Dämpfungswirkung immer der Bewegung des Pendels folgt, oder man kann die Magnetfelderzeugungseinrichtung und die Leiteranordnung auch in mehrere Teile aufteilen, die dann beispielsweise unter einem Winkel von 90° zueinander angeordnet sind, so dass unabhängig von der Bewegungsrichtung des Pendels immer eine Magnetfelderzeugungseinrichtung und eine Leiteranordnung relativ zueinander bewegt werden.

In einer alternativen Ausgestaltung kann vorgesehen sein, dass zwischen den beiden Elementen ein Luftspalt ausgebildet ist, der parallel zu einer Ebene angeordnet ist, auf der das Pendel im Ruhezustand senkrecht steht. Diese Ebene liegt dann horizontal. Auch dies ist eine relativ einfache Möglichkeit, eine Dämpfung unabhängig von der Bewegungsrichtung des Pendels zu erzielen.

Vorzugsweise ist der Wirbelstromdämpfer am in Schwerkraftrichtung unteren Ende des Pendels angeordnet. Am unteren Ende des Pendels ergibt sich die größte Bewegung des Pendels, so dass hier auch die größte Dämpfung erzielt werden kann.

Vorteilhafterweise ist die Tilgermasse höhenverstellbar am Pendel angeordnet. Durch die Verstellbarkeit der Tilgermasse ist es möglich, auch bei einer montierten Schwingungstilgeranordnung Einfluss auf die Frequenz zu nehmen, auf die das Pendel abgestimmt ist. Damit kann man der Tatsache Rechnung tragen, dass hohe und schlanke Bauwerke vielfach in geringem Umfang von der geplanten Konstruktion abweichen, wodurch sich ihre Eigenfrequenz verändert.

Auch ist von Vorteil, wenn das Pendel mit einer Federanordnung verbunden ist, die zwischen dem Pendel und dem Bauwerk positionierbar ist. Eine derartige Federanordnung wirkt dann in Bewegungsrichtung der Tilgermasse. Die Federanordnung dient zur Erhöhung der Tilgersteifigkeit.

Die Erfindung betrifft sowohl die Verwendung von den oben beschriebenen Wirbelstromdämpfern in Verbindung mit rein passiven Schwingungstilgern als auch deren Verwendung in Verbindung mit semiaktiven und aktiven Schwingungstilgern, d.h. bei Schwingungstilgern, bei denen entweder die passiven Parameter, bevorzugt Steifigkeit bzw. Tilgereigenfrequenz und Dämpfung, mit Hilfe von Sensoren und Aktoren eingestellt werden können (semiaktiver Schwingungstilger) oder aber bei denen die schwingungsmindernden Kräfte selbst mit Hilfe von Sensoren und Aktoren erzeugt werden (aktive Schwingungstilger).

Die Erfindung betrifft auch ein Bauwerk mit einer Schwingungstilgeranordnung wie sie oben beschrieben worden ist.

Die Erfindung wird im Folgenden anhand von bevorzugten Ausführungsbeispielen in Verbindung mit der Zeichnung beschrieben. Hierin zeigen:
- Fig. 1: eine stark schematisierte Darstellung einer Windenergieanlage,
- Fig. 2: eine erste Ausgestaltung einer Tilgermasse mit einer Dämpferanordnung,
- Fig. 3: die Ausgestaltung nach Fig. 2 von unten,
- Fig. 4: eine Einzelheit III nach Fig. 3,
- Fig. 5: eine zweite Ausgestaltung einer Tilgermasse mit einer Dämpferanordnung,
- Fig. 6: eine vergrößerte Darstellung der Dämpferanordnung und
- Fig. 7: die Dämpferanordnung von unten.

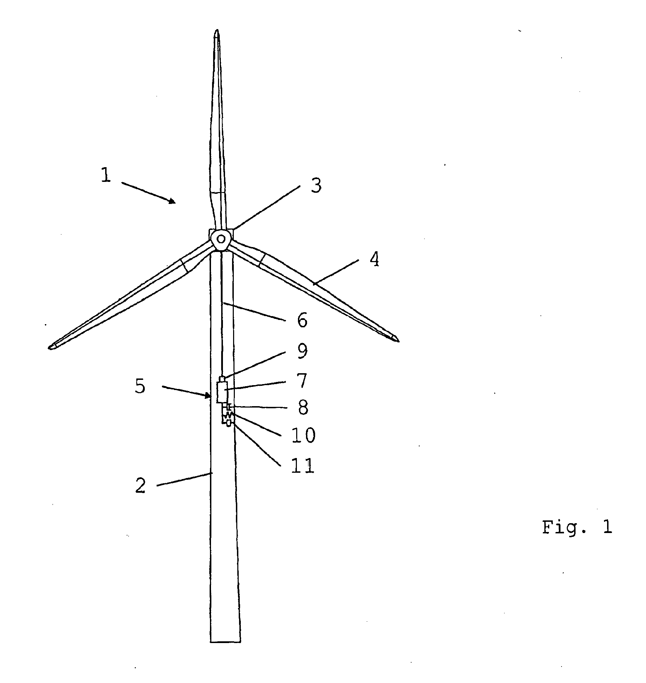

Fig. 1 zeigt schematisch eine Windenergieanlage 1 mit einem Turm 2. Der Turm hat beispielsweise eine Höhe von 100 m und einen Durchmesser von 4 m. Am oberen Ende des Turmes 2 ist eine Gondel 3 angeordnet, die einen Rotor 4 trägt. Wenn der Rotor 4 sich dreht, treibt er einen in der Gondel 3 angeordneten Generator an.

Im Turm 2 ist eine Tilgeranordnung 5 vorgesehen. Die Tilgeranordnung weist ein Pendel 6 auf, das am Turm 2 aufgehängt ist. Das Pendel 6 weist eine Tilgermasse 7 auf. Unterhalb der Tilgermasse 7 ist eine Dämpferanordnung 8 angeordnet, die als Wirbelstromdämpfer ausgebildet ist.

Optional weist die Tilgeranordnung eine Verstelleinrichtung 9 auf, mit der die Tilgermasse 7 entlang des Pendels 6 verschoben werden kann. Dies dient der Einstellung der Tilgereigenfrequenz im Falle einer Ausführung als semiaktiver Tilger.

Optional weist die Tilgeranordnung zusätzliche Federelemente 10 auf, mit Hilfe derer die Steifigkeit des Tilgers erhöht werden kann. Dadurch kann der Tilger auf höhere Tilgereigenfrequenzen eingestellt werden, die alleine durch Reduktion der effektiven Länge des Pendels 6 nicht eingestellt werden können.

Optional weist die Tilgeranordnung einen Aktor 11 auf, wodurch die Anwendung als aktiver Tilger ermöglicht wird.

Der Turm 2 ist als Stahlturm ausgebildet, d.h. er weist eine Wand auf, die aus mehreren Stahlsegmenten zusammengesetzt ist. Die einzelnen Stahlsegmente haben die Form eines Kreiszylinders, der sich leicht nach oben hin verjüngt.

Die hier dargestellte Tilgeranordnung 5 dient im Wesentlichen zum Dämpfen der ersten Eigenfrequenz des Turms. Wenn die Dämpfung einer anderen Eigenfrequenz des Turms gewünscht ist, dann muss das Pendel 6 unter Umständen an einer anderen Position mit dem Turm 2 verbunden werden.

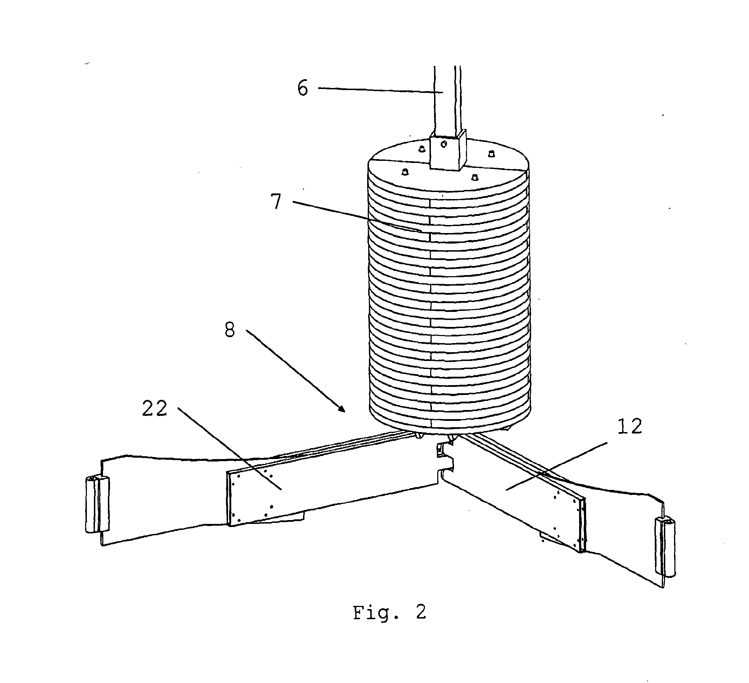

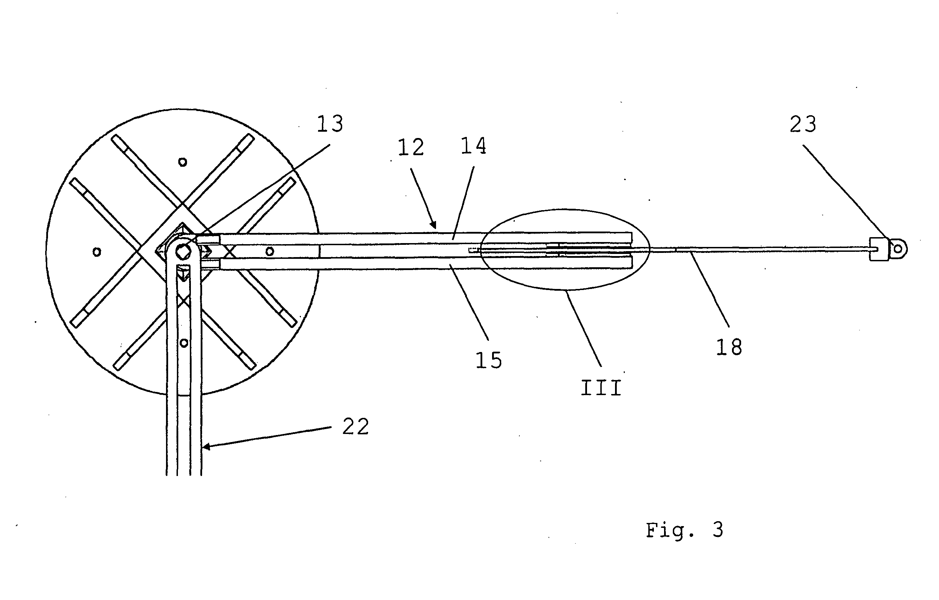

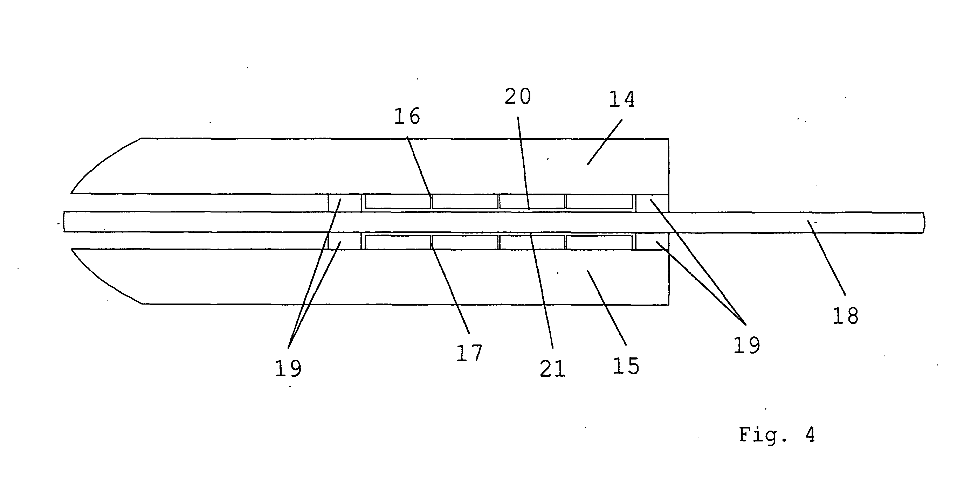

Die Fig. 2 bis 4 zeigen eine erste Ausgestaltung der Tilgeranordnung im Ausschnitt.

Die Tilgermasse 7 ist am unteren Ende des Pendels 6 aufgehängt. Das Pendel 6 ist hier als Pendelstab ausgebildet.

Die Dämpferanordnung 8 weist hier eine erste Magnetbaugruppe 12 auf, die über eine Pendel-Gelenkverbindung 13 mit der Tilgermasse 7 und damit mit dem Pendel 6 verbunden ist. Die erste Magnetbaugruppe 12 weist zwei Träger 14, 15 auf, von denen jeder eine Reihe von Permanentmagneten 16, 17 trägt. In jeder Reihe von Permanentmagneten 16, 17 sind Permanentmagnete mit abwechselnd unterschiedlich ausgerichteten Polarisierungen angeordnet. Zwischen den Permanentmagneten 16, 17 ist eine Leiteranordnung 18 angeordnet, die im vorliegenden Fall als Platte aus Aluminium oder Kuper oder einer Legierung aus Aluminium und Kupfer gebildet ist. Die Permanentmagnete 16, 17 sind so zueinander angeordnet, dass das durch sie erzeugte Magnetfeld durch die Leiteranordnung 18 hindurch tritt. Die Leiteranordnung ist unmagnetisch und schirmt das Magnetfeld nicht ab. Zwischen den Permanentmagneten 16, 17 und der Leiteranordnung 18 ist eine Gleitanordnung 19 vorgesehen. Die Gleitanordnung 19 erlaubt ein reibungsarmes Gleiten der Leiteranordnung 18 zwischen den Permanentmagneten 16, 17, so dass ein Verschleiß klein gehalten werden kann. Darüber hinaus erlaubt die Gleitanordnung 19, einen Luftspalt 20, 21 zwischen der Leiteranordnung 18 und den Permanentmagneten 16, 17 auf eine außerordentlich kleine Dicke einzustellen. Je kleiner der Luftspalt ist, desto besser ist die Wirkung der Permanentmagneten 16, 17 bei der Erzeugung von Wirbelströmen in der Leiteranordnung 18. Diese Wirbelströme 18 werden induziert, wenn sich die Permanentmagnete 16, 17 relativ zu der Leiteranordnung 18 bewegen.

Eine zweite Magnetbaugruppe 22 ist ebenfalls über die Pendel-Gelenkverbindung 13 mit dem Pendel 6 verbunden. Die zweite Magnetbaugruppe 22 ist im Ruhezustand des Pendels 6, also wenn das Pendel 6 senkrecht hängt, etwa senkrecht zur ersten Magnetbaugruppe 12 ausgerichtet. Die Pendel-Gelenkverbindung erlaubt eine gewisse Beweglichkeit der beiden Magnetbaugruppen 12, 22 relativ zu dem Pendel 6.

Im Übrigen gilt die Beschreibung der ersten Magnetbaugruppe 12 in entsprechender Weise für die zweite Magnetbaugruppe 22, d.h. die zweite Magnetbaugruppe 22 weist ebenfalls Permanentmagnete auf, zwischen denen eine Leiteranordnung angeordnet ist.

Die Leiteranordnung 18 ist über eine Bauwerks-Gelenkverbindung 23 mit dem Turm verbunden, so dass die Leiteranordnung 18 in gewissen Bereichen auch der Schwingungsbewegung des Pendels 6 folgen kann.

Die Träger 14, 15 bilden gemeinsam mit der Gleitanordnung 19 eine Parallelführung für die Leiteranordnung 18, so dass man über die gesamte Schwingungsbewegung des Pendels 6 einen konstanten Luftspalt aufrechterhalten kann. Dementsprechend ergeben sich über den gesamten Schwingungsbereich des Pendels 6 die gleichen Verhältnisse bei der Erzeugung der Wirbelströme. Somit ist die Dämpfungswirkung über den gesamten Schwingungsbereich gleich.

Selbstverständlich ist es möglich, anstelle von Permanentmagneten auch Elektromagnete zu verwenden. Bei Permanentmagneten wird ein Magnetfeld durch die Permanentmagnete erzeugt. Bei Elektromagneten ist zur Erzeugung des Magnetfeldes eine elektrische Energiezufuhr erforderlich.

Selbstverständlich ist es auch möglich, die Leiteranordnung 18 mit dem Pendel 6 und die Magnetbaugruppen 12, 22 mit dem Turm 2 zu verbinden.

Die beiden Magnetbaugruppen 12, 22 bilden zusammen die Magnetfelderzeugungseinrichtung.

Bei der Ausgestaltung nach den Fig. 2 bis 4 ist der Luftspalt 20, 21, der zwischen den Permanentmagneten 16, 17 und der Leiteranordnung 18 ausgebildet ist, in einer Ebene angeordnet, die parallel zu einer Ebene angeordnet ist, in der sich das Pendel in einem Ruhezustand befindet.

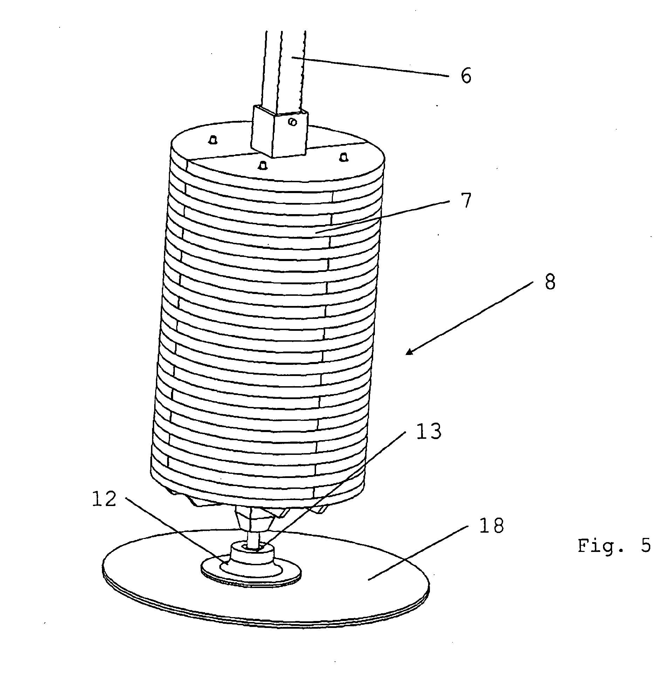

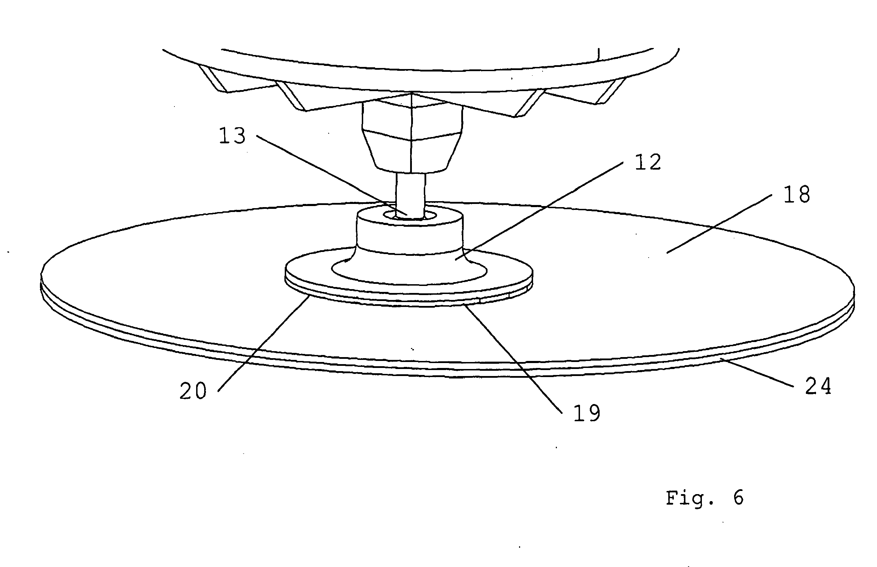

Die Fig. 5 bis 7 zeigen eine abgewandelte Ausgestaltung, bei der der Luftspalt 20 in einer Ebene angeordnet ist, auf der das Pendel 6 in einem Ruhezustand senkrecht steht. Gleiche Elemente wie in den Fig. 1 bis 4 sind mit den gleichen Bezugszeichen versehen.

Die Leiterplatte 18 ist hier von einer Trägerplatte 24 unterstützt. Die Trägerplatte 24 kann beispielsweise aus Stahl gebildet sein, wodurch eine positive Beeinflussung des magnetischen Feldes erreicht wird.

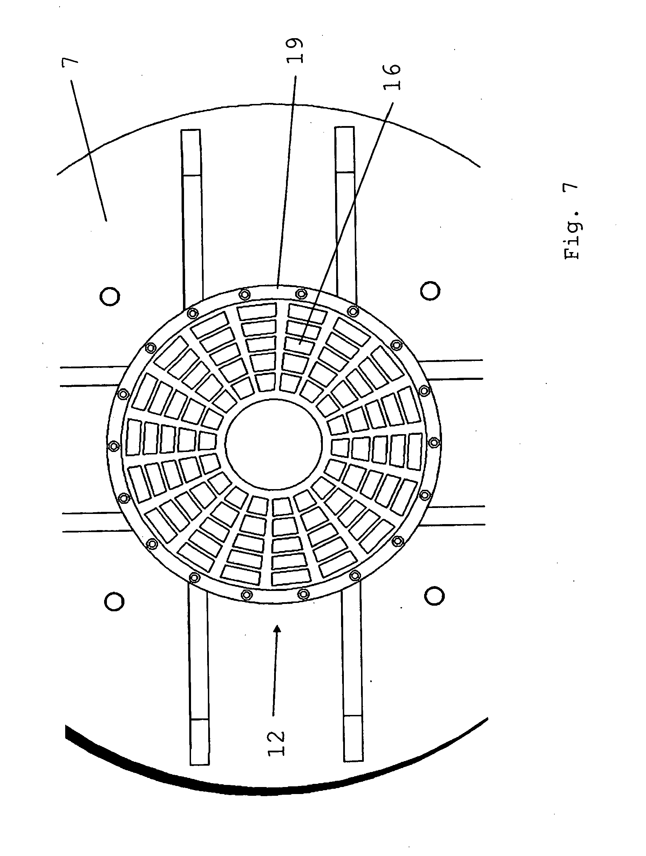

Zwischen der Magnetbaugruppe 12 und der Leiteranordnung 18 ist wiederum eine Gleitanordnung 19 vorgesehen, die als ringförmiger Gleitbelag zwischen der Magnetbaugruppe 12 und der Leiteranordnung 18 ausgebildet ist. Wie man aus Fig. 7 erkennen kann, weist die Magnetbaugruppe 12 eine Vielzahl von Permanentmagneten 16 auf, die in mehreren Kreisringen, hier fünf Kreisringen, angeordnet sind. Jeder Kreisring ist in mehrere Segmente unterteilt, im vorliegenden Fall in achtzehn Segmente. Zweckmäßigerweise sind die Permanentmagnete 16 immer mit abwechselnder Orientierung angeordnet, so dass in einem Kreisring in Umlaufrichtung des Kreisrings immer ein Permanentmagnet mit einem Nordpol und der nächste Permanentmagnet mit einem Südpol zur Leiteranordnung 18 weist. In jedem Segment sind die Permanentmagnete in radialer Richtung ebenfalls mit abwechselnder Polarität angeordnet, so dass auf einen Permanentmagneten, der mit einem Nordpol zur Leiteranordnung 18 gerichtet ist, in Radialrichtung ein Permanentmagnet folgt, der mit einem Südpol zur Leiteranordnung 18 gerichtet ist, wobei dann wieder ein Permanentmagnet folgt, der mit einem Nordpol zur Leiteranordnung 18 gerichtet ist.

Die Pendel-Gelenkverbindung 13 erlaubt nicht nur eine Winkeländerung zwischen dem Pendel 6 und der Magnetbaugruppe 12, sondern auch einen gewissen Höhenversatz zwischen dem Pendel 6 und der Magnetbaugruppe, also eine Bewegung im Wesentlichen senkrecht zur Bewegung des Pendels 6. Die Gleitanordnung 19 definiert den Abstand zwischen der Magnetbaugruppe 12 und der Leiteranordnung 18, so dass bei einer Bewegung des Pendels 6 die Magnetbaugruppe 12 praktisch nur auf der Leiteranordnung 18 verschoben wird. Der Luftspalt 20 zwischen der Magnetbaugruppe 12 und der Leiteranordnung 18 kann also über die gesamte Auslenkung des Pendels 6 konstant gehalten werden.

Beide Dämpferanordnungen arbeiten im Prinzip auf die gleiche Weise. Bei einer Bewegung des Pendels 6 wird die Magnetfelderzeugungseinrichtung, die durch die Baugruppen 12, 22 (Fig. 2 bis 4) oder die Magnetbaugruppe 12 (Fig. 5 bis 7) gebildet ist, relativ zur Leiteranordnung 18 bewegt. Bei der Bewegung wird dementsprechend ein Magnetfeld relativ zu einem Leiter bewegt, so dass in dem Leiter Wirbelströme induziert werden. Da die Leiteranordnung 18 keine diskreten Leiterbahnen aufweist, können sich die Wirbelströme in dieser Leiteranordnung 18 frei ausbilden, unabhängig von der genauen Position des Pendels 6 relativ zur Leiteranordnung 18. Die zur Ausbildung der Wirbelströme erforderliche Energie wird der Bewegungsenergie des Pendels 6 entzogen und führt damit zu der gewünschten Dämpfung.

Mit beiden Ausgestaltungen lässt sich eine weitgehend temperaturunabhängige Dämpfungskraft einstellen. Man erhält eine gute Linearität, d.h. eine geschwindigkeitsproportionale Dämpfungskraft, unabhängig von der Position oder Auslenkung des Pendels 6. Beim Beginn einer Schwingungsbewegung muss man keine Losbrechkräfte oder Stick-Slip-Effekte überwinden. Die Komponenten der Dämpfungsanordnung 8 arbeiten praktisch verschleißfrei, d.h. der Aufwand für Wartung kann außerordentlich klein gehalten werden.

Man kann die Dämpferanordnung 8 relativ leicht an unterschiedliche Gegebenheiten anpassen. So kann man beispielsweise die Abmessungen der Magnetbaugruppen 12, 22 oder der Magnetbaugruppe 12 variieren. Solange sichergestellt ist, dass auch bei der größten Auslenkung des Pendels 6 eine Überdeckung zwischen der Magnetfelderzeugungseinrichtung und der Leiteranordnung 18 besteht, kann man die Magnetbaugruppen 12, 22 praktisch beliebig vergrößern. Eine weitere Einstellmöglichkeit ergibt sich durch die Wahl des Werkstoffs für die Leiteranordnung und durch die Wahl der geometrischen Abmessungen, insbesondere der Dicke der Leiteranordnung und des Luftspalts.

Die durch die Wirbelströme erzeugte Wärme kann über die Oberfläche der Leiteranordnung 18 problemlos abgeführt werden.

## Patentansprüche

1. Schwingungstilgeranordnung zur Verminderung von Schwingungen für hohe schlanke Bauwerke (2), mit einem Pendel (6), das am Bauwerk (2) aufhängbar ist und eine Tilgermasse (7) aufweist, und einer Dämpferanordnung (8), **dadurch gekennzeichnet, dass** die Dämpferanordnung (8) als Wirbelstromdämpfer ausgebildet ist, wobei der Wirbelstromdämpfer zwei Elemente aufweist, von denen eines als Magnetfelderzeugungseinrichtung (12, 22) und eines als Leiteranordnung (18) ausgebildet ist, wobei eines der Elemente durch eine Bewegung des Pendels (6) relativ zum anderen bewegbar ist, und zwischen den beiden Elementen eine Gleitanordnung (19) angeordnet ist.

2. Schwingungstilgeranordnung nach Anspruch 1, **dadurch gekennzeichnet, dass** die Leiteranordnung eine leitfähige Platte aufweist, die parallel zur Richtung der Bewegung des Pendels (6) angeordnet ist.

3. Schwingungstilgeranordnung nach Anspruch 2, **dadurch gekennzeichnet, dass** die Platte aus Aluminium oder Kupfer oder einer Legierung aus Aluminium und Kupfer oder aus einem anderen Material mit hoher elektrischer Leitfähigkeit gebildet ist.

4. Schwingungstilgeranordnung nach einem der Ansprüche 1 bis 3, **dadurch gekennzeichnet, dass** die Leiteranordnung (18) von einer Trägerplatte (24) unterstützt ist.

5. Schwingungstilgeranordnung nach einem der Ansprüche 1 bis 4, **dadurch gekennzeichnet, dass** eines der Elemente über eine Pendel - Gelenkverbindung (13) mit dem Pendel (6) verbunden ist.

6. Schwingungstilgeranordnung nach Anspruch 5, **dadurch gekennzeichnet, dass** die Pendel - Gelenkverbindung (13) eine Bewegung zwischen dem Pendel (6) und dem Element senkrecht zur Richtung der Bewegung des Pendels (6) erlaubt.

7. Schwingungstilgeranordnung nach Anspruch 5 oder 6, **dadurch gekennzeichnet, dass** das andere der Elemente über eine Bauwerks-Gelenkverbindung (23) mit dem Bauwerk (2) verbindbar ist.

8. Schwingungstilgeranordnung nach einem der Ansprüche 5 bis 7, **dadurch gekennzeichnet, dass** die beiden Elemente über eine Parallelführung miteinander gekoppelt sind.

9. Schwingungstilgeranordnung nach Anspruch 7, **dadurch gekennzeichnet, dass** eines der Elemente mit zwei Teilen (14, 15) ausgebildet ist und das andere Element zwischen den beiden Teilen (14, 15) angeordnet ist.

10. Schwingungstilgeranordnung nach einem der Ansprüche 1 bis 9, **dadurch gekennzeichnet, dass** zwischen den beiden Elementen ein Luftspalt (20, 21) ausgebildet ist, der parallel zu einer Ebene angeordnet ist, in der sich das Pendel (6) in einem Ruhezustand befindet.

11. Schwingungstilgeranordnung nach einem der Ansprüche 1 bis 9, **dadurch gekennzeichnet, dass** zwischen den beiden Elementen ein Luftspalt (20) ausgebildet ist, der parallel zu einer Ebene angeordnet ist, auf der das Pendel (6) im Ruhezustand senkrecht steht.

12. Schwingungstilgeranordnung nach einem der Ansprüche 1 bis 11, **dadurch gekennzeichnet, dass** der Wirbelstromdämpfer am in Schwerkraftrichtung unteren Ende des Pendels (6) angeordnet ist.

13. Schwingungstilgeranordnung nach einem der Ansprüche 1 bis 12, **dadurch gekennzeichnet, dass** die Tilgermasse (7) höhenverstellbar am Pendel (6) angeordnet ist.

14. Schwingungstilgeranordnung nach einem der Ansprüche 1 bis 13, **dadurch gekennzeichnet, dass** das Pendel (6) mit einer Federanordnung (10) verbunden ist, die zwischen dem Pendel (6) und dem Bauwerk (2) positionierbar ist.

15. Bauwerk (2) mit einer Schwingungstilgeranordnung nach einem der Ansprüche 1 bis 12.

## Claims

1. Vibration absorber arrangement for reducing vibrations for use on tall, narrow structures (2), comprising a pendulum (6), which can be suspended on the structure (2) and comprises an absorption mass (7), and a damper arrangement (8), **characterised in that** the damper arrangement (8) is designed as an eddy current damper, the eddy current damper having two elements, one of which is designed as a means (12, 22) for generating a magnetic field and the other as a conductor arrangement (18), one of the elements being movable relative to the other as a result of the pendulum (6) moving and a slider arrangement (19) being arranged between the two elements.

2. Vibration absorber arrangement according to claim 1, **characterised in that** the conductor arrangement comprises a conductive plate that is arranged in parallel with the direction of movement of the pendulum (6).

3. Vibration absorber arrangement according to claim 2, **characterised in that** the plate is made of aluminium, copper, an aluminium-copper alloy or another material having good electrical conductivity.

4. Vibration absorber arrangement according to any of claims 1 to 3, **characterised in that** the conductor arrangement (18) is supported by a supporting plate (24).

5. Vibration absorber arrangement according to any of claims 1 to 4, **characterised in that** one of the elements is connected to the pendulum (6) by means of a pendulum joint (13).

6. Vibration absorber arrangement according to claim 5, **characterised in that** the pendulum joint (13) allows for a movement between the pendulum (6) and the element perpendicular to the direction of movement of the pendulum (6).

7. Vibration absorber arrangement according to either claim 5 or claim 6, **characterised in that** the other element can be connected to the structure (2) by means of a structure joint (23).

8. Vibration absorber arrangement according to any of claims 5 to 7, **characterised in that** the two elements are coupled to one another by means of a parallel guide.

9. Vibration absorber arrangement according to claim 7, **characterised in that** one of the elements is formed having two parts (14, 15) and the other element is arranged between said two parts (14, 15).

10. Vibration absorber arrangement according to any of claims 1 to 9, **characterised in that** an air gap (20, 21) is formed between the two elements and is arranged in parallel with a plane in which the pendulum (6) is arranged when in a non-operative state.

11. Vibration absorber arrangement according to any of claims 1 to 9, **characterised in that** an air gap (20) is formed between the two elements and is arranged in parallel with a plane to which the pendulum (6) is perpendicular when in the non-operative state.

12. Vibration absorber arrangement according to any of claims 1 to 11, **characterised in that** the eddy current damper is arranged on the lower end, in the direction of gravity, of the pendulum (6).

13. Vibration absorber arrangement according to any of claims 1 to 12, **characterised in that** the absorption mass (7) is arranged on the pendulum (6) in a height-adjustable manner.

14. Vibration absorber arrangement according to any of claims 1 to 13, **characterised in that** the pendulum (6) is connected to a spring arrangement (10) that can be positioned between the pendulum (6) and the structure (2).

15. Structure (2) comprising a vibration absorber arrangement according to any of claims 1 to 12.

## Revendications

1. Agencement d'amortissement d'oscillations destiné à la réduction des oscillations pour des bâtiments (2) minces et hauts, avec un pendule (6) qui peut être suspendu au bâtiment (2) et présente une masse d'amortissement (7), et un ensemble amortisseur (8), **caractérisé en ce que** l'ensemble amortisseur (8) est réalisé comme un amortisseur à courant de Foucault, l'amortisseur à courant de Foucault présentant deux éléments, dont un est réalisé comme un dispositif de génération de champ magnétique (12, 22) et l'autre est réalisé comme un agencement conducteur (18), l'un des éléments pouvant être déplacé par rapport à l'autre par un mouvement du pendule (6), et un agencement glissant (19) étant agencé entre les deux éléments.

2. Agencement d'amortissement d'oscillations selon la revendication 1, **caractérisé en ce que** l'agencement conducteur présente une plaque conductrice qui est agencée parallèlement à la direction du mouvement du pendule (6).

3. Agencement d'amortissement d'oscillations selon la revendication 2, **caractérisé en ce que** la plaque est en aluminium ou en cuivre ou en un alliage d'aluminium et de cuivre ou en un autre matériau présentant une conductivité électrique élevée.

4. Agencement d'amortissement d'oscillations selon l'une quelconque des revendications 1 à 3, **caractérisé en ce que** l'agencement conducteur (18) est soutenu par une plaque porteuse (24).

5. Agencement d'amortissement d'oscillations selon l'une quelconque des revendications 1 à 4, **caractérisé en ce que** l'un des éléments est relié par une liaison pendule-articulation (13) au pendule (6).

6. Agencement d'amortissement d'oscillations selon la revendication 5, **caractérisé en ce que** la liaison pendule-articulation (13) permet un mouvement entre le pendule (6) et l'élément perpendiculairement à la direction du mouvement du pendule (6).

7. Agencement d'amortissement d'oscillations selon la revendication 5 ou 6, **caractérisé en ce que** l'autre des éléments peut être relié par une liaison bâtiment-articulation (23) au bâtiment (2).

8. Agencement d'amortissement d'oscillations selon l'une quelconque des revendications 5 à 7, **caractérisé en ce que** les deux éléments sont couplés ensemble par un guidage parallèle.

9. Agencement d'amortissement d'oscillations selon la revendication 7, **caractérisé en ce que** l'un des éléments est réalisé avec deux parties (14, 15) et l'autre élément est agencé entre les deux parties (14, 15).

10. Agencement d'amortissement d'oscillations selon l'une quelconque des revendications 1 à 9, **caractérisé en ce qu'**une fente d'air (20, 21) est réalisée entre les deux éléments, laquelle est agencée parallèlement à un plan, dans lequel le pendule (6) se trouve dans un état de repos.

11. Agencement d'amortissement d'oscillations selon l'une quelconque des revendications 1 à 9, **caractérisé en ce qu'**une fente d'air (20) est réalisée entre les deux éléments, laquelle est agencée parallèlement à un plan, sur lequel le pendule (6) se trouve perpendiculaire à l'état de repos.

12. Agencement d'amortissement d'oscillations selon l'une quelconque des revendications 1 à 11, **caractérisé en ce que** l'amortisseur à courant de Foucault est agencé sur l'extrémité inférieure du pendule (6) dans le sens de la force de gravité.

13. Agencement d'amortissement d'oscillations selon l'une quelconque des revendications 1 à 12, **caractérisé en ce que** la masse d'amortissement (7) est agencée de manière réglable en hauteur sur le pendule (6).

14. Agencement d'amortissement d'oscillations selon l'une quelconque des revendications 1 à 13, **caractérisé en ce que** le pendule (6) est relié à un agencement à ressort (10) qui peut être positionné entre le pendule (6) et le bâtiment (2).

15. Bâtiment (2) avec un agencement d'amortissement d'oscillations selon l'une quelconque des revendications 1 à 12.
